# EUROPEAN PATENT APPLICATION

(11) **EP 1 062 897 A1**
(43) Date of publication of application: **27.12.2000**
(21) Application number: 99112293.8
(22) Date of filing: 25.06.1999
(51) Int. Cl.: A47J 27/21

(54) **A kettle for boiling water**

(71) Applicant: Beau Monde Industries Ltd., Chai Wan (HK)
(72) Inventor: WUU, John, No 2, Hang Man Street, Chai Wan (HK)
(74) Representative: Urner, Peter, Dipl.-Phys.

(57) **Abstract**

The present invention relates to a kettle for boiling water that comprises a spout (14) for pouring water and a filter element (21) provided within the spout area. In order to prevent water from spitting out of the spout (14) when the water is boiling within the kettle a perforated baffle element (22) facing the filter element (21) within the spout area is provided.

## Description

The present invention relates to a kettle, in particular to an electric kettle for boiling water that has a spout for pouring water and a filter element provided within a spout area.

A conventional kettle comprises a container having a bottom and a circumferential side wall, a lid for closing an upper opening of the container, a handle attached to the outside of the side wall of the container, and a spout for pouring water. In addition, an electrical heating element is provided in the container near the bottom or in a metal bottom plate for heating water.

To prevent water from spitting out of the spout when the water is boiling the water level within the container has to be substantially lower than the spout. Thus, the space within the container can not be completely used for heating and boiling water.

Another conventional kettle comprising a container, a lid, a handle, a spout and a heating element arranged within a bottom plate of the container is provided with a filter element for retaining boiler scale and the like during pouring out hot water. The filter element consisting of a grid-like perforated plate is fixed to the lid in such a way that it is located within the spout area when the lid is closed. Although, the filter element is provided within a spout area the maximum water level have to be substantially lower than the spout area to stop water spitting out of the spout.

The object of the present invention is to provide another kettle for boiling water that has an increased water capacity compared with a conventional kettle of the same dimensions.

This object is achieved by providing a kettle for boiling water that comprises a spout for pouring water, a filter element provided within the spout area and a perforated baffle element facing the filter element within the spout area.

According to the present invention the filter element and the perforated baffle element, e. g. a small plastic shield having a plurality of through holes, create a two walls system at the spout of the kettle that breakes up the turbulences of the water when the water is boiling. This effect will stop the water spitting out of the spout. Consequently, the water will be contained safely within the kettle and will not splash out when boiling. Therefore, the invention allows a smaller kettle to be made with the same water capacity or to increase the water capacity of existing kettles. For example it is possible to increase the water capacity of e. g. 1.7 litres of an existing kettle to e. g. 2.0 litres by inserting a perforated baffle element together with a filter element or another perforated wall or baffle element as a spitting stopper into the spout area as proposed by the present invention.

According to another aspect of the present invention the baffle element and the filter element are substantially parallel to each other wherein both elements are in close proximity to each other so that a small gap is provided therebetween.

This arrangement allows to break up the turbulences in a two step manner. When the waves of boiling water run against the first perforated wall, e. g. against the baffle some water will spit through the holes of the baffle. However, the water spitting through the holes of the first perforated wall will run against the second perforated wall but almost all of this water will not passing the holes of the second perforated wall. Thus, the water will be safely contained within the kettle even if it is boiling. On the other hand, when the water should be poured out the water passing through the holes of the first perforated wall fills the gap between the walls, i. e. the space between the baffle and the filter element, and passes thereafter through the holes of the second perforated wall.

In addition to the described effect of stopping the water spitting out of the spout the retaining effect for boiler scale or the like is improved since the baffle element serves as an additional retaining element.

To ensure that the inventive kettle can be easily manufactured and cleaned the baffle element is detachable fixed onto the filter element wherein the baffle element is provided with spacing and fastening means which fit into corresponding fastening means provided at the filter element.

According to another aspect of the present invention the baffle element is directly fixed to the kettle nearest to the spout area. In particular, for fixing the baffle element directly to the kettle it is possible to provide fixing grooves on the inside of the side wall of the container near the spout. On the other hand it is possible to form the baffle element and/or the filter element as an integrated part of the container.

In this case the baffle element and/or the filter element is/are moulded together with the container. In particular, the container and the baffle element as well as the filter element are made of plastic by injection moulding.

According to another aspect of the present invention it is provided that the baffle element is fixed to a lid of the kettle in such a way that it is arranged in or nearest to the spout area when the lid is closed. In this case, if the lid is made of plastic the baffle element can be although made of plastic and can be formed as an integrated part of the lid.

According the another aspect of the present invention the filter element is a perforated plate made of plastic that is releasable attached to the kettle at the inlet region of the spout. Thus, it is possible to remove the filter element and, if the baffle element is attached thereon, simultaneously the baffle element for cleaning purposes.

According to another aspect of the present invention the baffle element is positioned at the inlet side of the filter element when it is located in or nearest to the spout area.

Referring to the accompanying drawings, which are given by way of illustration only, the present invention will be described in more detail. In the accompanying drawings:
**Figure 1** is a schematic side view of a kettle according to the present invention,
**Figure 2** is a top view of a filter-baffle-assembly used in the apparatus of Figure 1,
**Figure 3** is a sectional view taken substantially along line III/III of Figure 2,
**Figure 4** is a top view of a filter element,
**Figure 5** is a top view of a baffle element and,
**Figure 6** is a rear view of the baffle element according to Figure 5.

The same reference signs will be used for corresponding elements throughout the drawings.

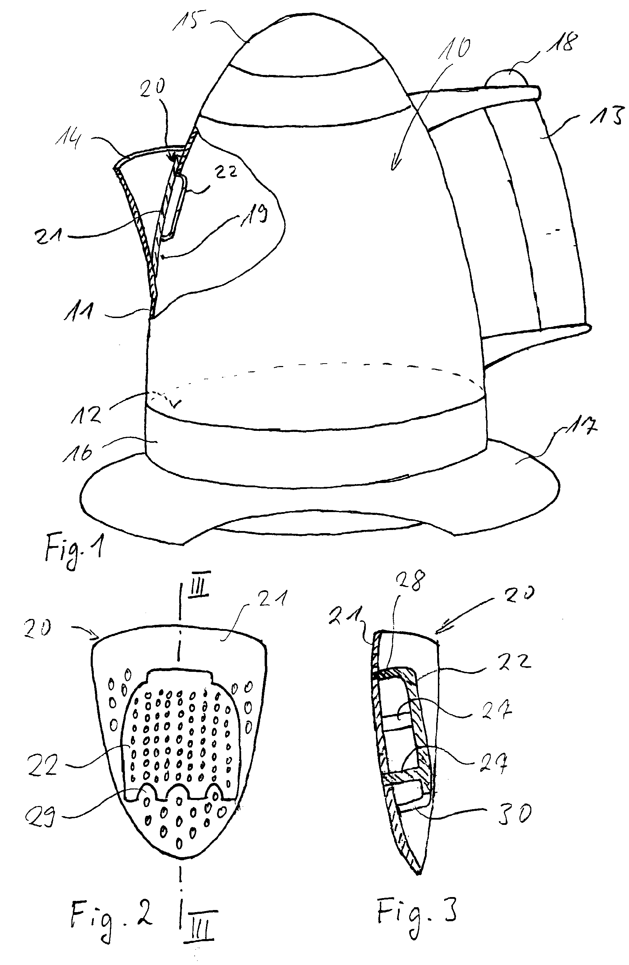

Referring to Figure 1 a kettle for boiling water according to the present invention comprises a container 10 including a circumferential side wall 11 and a bottom 12, a handle 13 attached to the side wall 11, a spout 14 for pouring water, and a lid 15 for closing an upper opening of the container 10. An electrical heating element (not shown) for heating water can be arranged within a bottom plate 16.

The kettle is removable placed on a power supply station 17. An ON/OF switch 18 is provided on the handle 13 for switching the power supply when the kettle is placed on the power supply station.

The spout 14 that is integrally formed with the side wall 11 of the container 12 is arranged opposite to an opening 19 in the side wall 11. The opening 19 that acts as inlet area of the spout 14 is covered by a spitting stopper 20 comprising a first perforated wall, e. g. a filter 21 and a second perforated wall, e. g. a baffle 22.

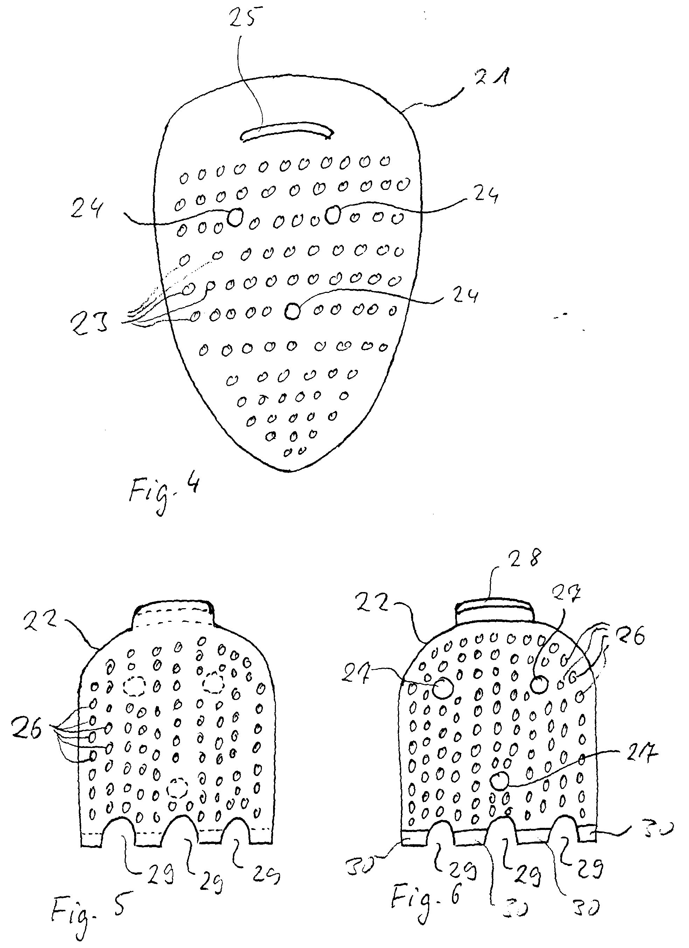

As can be seen best in Figure 4 the first perforated wall or filter 21 preferable made of plastic comprises a plurality of through holes 23 acting as water passages, fastening holes 24 and a fastening slit 25. The fastening means provided on the filter 21, e. g. the fastening holes 24 and the fastening slit 25, coact with corresponding spacing and fastening means provided at the second perforated wall or baffle 22. As can be seen in Figure 3, 5 and 6 the second perforated wall or baffle 22 that can be e. g. plastic shield with a plurality of through holes 26 is provided with three pins or poles 27 which fit into the fastening holes 24 of the filter 21 when the baffle 22 is attached to the filter 21. A top flange 28 projecting perpendicularly from the baffle 22 forms an additional fastening means that fit into the fastening slit 25 of the filter 21.

The through holes 23, 26 are arranged in such a way that the holes 23 of the filter 21 are not in alignment with the holes 26 of the baffle 22 when these elements are assembled so that there is not direct passage way for water.

The baffle 22 further comprises cut outs 29 provided between spacing bars 30 extending substantially in parallel with the poles 27.

Prior to inserting the spitting stopper 20 into the spout area, i. e. into the opening 19 in the side wall 11 of the container 10 of the kettle. The first and second perforated walls, i. e. the filter 21 and the baffle 22 are assembled by clicking the poles 27 and the top flange 28 of the baffle 22 into the fastening holes 24 and the fastening slit 25, respectively. Thereafter, the double wall system, i. e. the spitting stopper 20 obtained by assembling the filter 21 and the baffle 22, is inserted into the opening 19 so as to prevent water from spitting out of the spout when the water within the container 10 is boiling. In this case the baffle 22, i. e. the inner perforated wall breakes up the turbulences or waves of the boiling water. Consequently, boiling water is prevented from spitting out of the spout. In addition, small chips of boiler scale will be retained within the container by the spitting stopper 20 when water is poured out of the kettle. In this case very small chips of boiler scale that pass the through holes 26 of the baffle 22 will be at least partially retained by the filter 21. Such retained chips of boiler scale will be discharged from the space between the two perforated walls through the cut outs 29 back into the container 10.

For cleaning purposes the spitting stopper 20 can be removed from the spout area and can be easily disassembled so that the first and second perforated walls, i. e. the filter 21 and the baffle 22 can be separately cleaned.

Depending on the design of the kettle several variations and modifications of the spitting stopper 20, the filter 21 and or the baffle 22 are possible.

In particular, it is possible to attach both the first and the second perforated walls of the spitting stopper 20 directly to the side wall 11 of the container 10 in the spout area. In addition, it is although possible to provide the filter 21 and/or the baffle 22 as an integrated part of the lid 15 so that the filter 21 and/or the baffle 22 are located within the inlet area of the spout when the lid is closed. Furthermore, one or both perforated walls can be formed as integrated parts of the side wall 11 of the container 10. In addition, it is possible to fix the first perforated wall on the container 10 in the spout area and to attach the second perforated wall to the lid in such a way that the second perforated wall is arranged in parallel to the first perforated wall in the spout area when the lid is closed. As can be seen from the illustrating examples of different arrangements of the first and second perforated walls there are a lot of possibilities to create a double wall system having a small gap there between so that water can be passing through the double wall system of the spitting stopper when it should be poured out but can be prevented from spitting out when the water is boiling.

The present invention makes it possible to save materials since it allows either to produce smaller kettles having the same water capacity or to increase the water capacity of kettles having the same dimensions as conventional kettles.

## Claims

1. A kettle for boiling water, comprising:
- a spout for pouring water, and
- a filter element provided within the spout area,
**characterized** in that a perforated baffle element is facing the filter element within the spout area.

2. A kettle as claimed in claim 1, **characterized** in that the baffle element and the filter element are substantially parallel to each other and the holes in one element are not in alignment with the holes in the other element.

3. A kettle as claimed in claim 1 or 2, **characterized** in that the baffle element and the filter element are in close proximity to each other so that a small gap is provided there between.

4. A kettle as claimed in claim 1, 2 or 3, **characterized** in that the baffle element is detachable fixed onto the filter element.

5. A kettle as claimed in claim 4, **characterized** in that the baffle element is provided with spacing and fastening means which fit into corresponding fastening means provided at the filter element.

6. A kettle as claimed in claim 1, 2 or 3, **characterized** in that in that the baffle element is directly fixed to the kettle nearest to the spout area.

7. A kettle as claimed in claim 1, 2 or 3, **characterized** in that the baffle element is fixed to a lid of the kettle in such a way that it is arranged in or nearest to the spout area when the lid is closed.

8. A kettle as claimed in any one of the claim 1 to 7, **characterized** in that the filter element is a perforated plate made of plastic that is releasable attached to the kettle at the inlet region of the spout.

9. A kettle as claimed in any one of the claim 1 to 8, **characterized** in that the baffle element is positioned at the inlet side of the filter element when it is located in or nearest to the spout area.
